(19) Europäisches Patentamt
European Patent Office
Office européen des brevets

(11) **EP 2 580 515 B1**

(12) **EUROPEAN PATENT SPECIFICATION**

(45) Date of publication and mention
of the grant of the patent:
**04.04.2018 Bulletin 2018/14**

(21) Application number: **11731461.7**

(22) Date of filing: **09.06.2011**

(51) Int Cl.:
*F16M 11/04* *(2006.01)*      *F16M 11/12* *(2006.01)*
*F16M 13/02* *(2006.01)*

(86) International application number:
**PCT/GB2011/000874**

(87) International publication number:
**WO 2011/154703 (15.12.2011 Gazette 2011/50)**

(54) **SUPPORT SYSTEM**

UNTERSTÜTZUNGSSYSTEM

SYSTÈME DE SUPPORT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.02.2011  US 201113024685
09.06.2010  GB 201009680**

(43) Date of publication of application:
**17.04.2013  Bulletin 2013/16**

(73) Proprietor: **Colebrook Bosson & Saunders
(Products) Limited
Chippenham, Wiltshire SN14 0GF (GB)**

(72) Inventors:
• **LAU, Alex
London SE1 1SD (GB)**

• **WILLS, Andrew
London SE1 1SD (GB)**

(74) Representative: **Vleck, Jan Montagu
Reddie & Grose LLP
The White Chapel Building
10 Whitechapel High Street
London E1 8QS (GB)**

(56) References cited:
| | |
|---|---|
| **EP-A1- 1 895 225** | **EP-A2- 1 471 300** |
| **WO-A1-2008/098378** | **CZ-U1- 1 666** |
| **GB-A- 2 447 623** | **TW-U- M 368 005** |
| **US-A- 4 160 536** | **US-A1- 2004 188 578** |
| **US-A1- 2005 205 734** | **US-A1- 2008 029 661** |

**Description**

The present invention is concerned with a support system. Particular embodiments of the invention are concerned with a moveable support arm for a monitor or display device.

Modern screen-based display devices are typically flat-screen monitors such as liquid crystal display (LCD) or plasma screen displays. Such devices can be mounted on elevated support devices such as a support arm which can then be secured to a surface such that the flat-screen monitor is held above or in front of the surface.

Support systems for monitors are known which allow for movement in three dimensions of the head, mount or bracket on which the monitor is mounted. This is so as to allow for a full range of adjustment of the monitor. GB 2 438 581 and US 7,438,269 both disclose mounts or brackets including an arcuate connection which allows a monitor to be pivoted about a substantially horizontal virtual pivot axis. In US 7,438,260 the virtual pivot axis passes through the centre of gravity of a monitor or display so as to reduce the forces necessary to hold the mount in place at a selected position on the arcuate connection.

In order to allow for sufficient adjustment about a substantially vertical axis (or an axis orthogonal to the axis of the arcuate connection), known arrangements such as those disclosed in GB 2 447 623, GB 2 438 581 and US 7,438,269 have a second pivoting mechanism entirely separate from the first. The second pivot is a separate vertical rod-like element defining a vertical axis. This second pivot is distinct and separated from the pivot of the arcuate connector.

These prior art arrangements require two separate and distinct pivot arrangements. They are therefore relatively complicated and expensive to build, have two pivots (and therefore more moving parts) which can fail and are relatively unsightly.

GB 2 447 623 discloses a support system as defined in the preamble to claim 1.

The present invention, provides a support system as defined in claim 1 to which reference should now be made. Preferred features are defined in the dependent claims 2 to 10.

The present invention, provides a single simple mechanism which allows a full range of adjustment of a load in three orthogonal directions (i.e. about orthogonal X, Y and Z axes). This mechanism is easier and cheaper to make than the known arrangements and is aesthetically more pleasing.

Support systems for monitors comprising an articulated arm arrangement for raising and lowering a monitor are known with tiltable mount or bracket mechanisms which keep the monitor in the same plane as the arm moves up and down. The known arrangements such as those disclosed in US 2004/0245419 have a four bar linkage or parallelogram arrangement in which there is a second link or arm below (or above) and parallel to the main support arm and pivotally coupled to the tiltable mount or bracket on which a monitor is mounted. The second link or arm is pivotally coupled to the mount or bracket below (or above) the pivot between the main support arm and the mount, and also pivotally coupled to the base or support element to which the other end of the main support arm is pivotally coupled at a point below (or above) the pivot between the main support arm and the base or support element. The main support arm and the second link arm are parallel to each other and the linkage (which can be considered to be a line drawn between) the pairs of pivots on each of the base element and mount are also parallel to each other.

This parallelogram four-bar linkage means that as the support arm is moved up and down the linkage between the two pivots on the tilt mount remains in the same plane parallel to the linkage between the two pivots on the base element.

A disadvantage of the known four-bar parallelogram linkage arrangements is the need to provide a second link parallel to and separate from the support arm. Such arrangements therefore must have a second visible (and therefore unsightly) link or arm parallel to the main support arm. Alternatively, such parallelogram arrangements have a large deep casing which can house the main support arm, the second parallel link and the space therebetween. This is bulky and therefore also unsightly.

Preferred embodiments of the present invention will now be described, by way of nonlimiting example only, with reference to the attached figures. The figures are only for the purposes of explaining and illustrating preferred embodiments of the invention and are not to be construed as limiting the claims. The skilled man will readily and easily envisage alternative embodiments of the invention in its various aspects.

In the figures:

Figure 1 is a perspective view of a support device embodying the present invention;

Figure 2 is a side view of the support device of figure 1;

Figure 3 is a top view of the support device of figure 1;

Figure 4 is a partially exploded view of the support device of figures 1 to 3;

Figure 5 is an exploded view of the upper arm of the support device of figures 1 to 4;

Figure 6 is a perspective view of the mounting and movement head of the device of figures 1 to 5;

Figure 7 is a partially exploded view of portions of the mounting and movement head of figure 6;

Figure 8 is an exploded view of the upper end of the upper arm and the mounting and movement head of figures 1 to 6;

Figure 9 is a cross-sectional view of aspects of the mounting and movement head along section IX - IX in figure 2;

Figures 10a and 10b are cross-sectional views along part of section X - X in figure 3 illustrating adjustment of the mounting and movement head in a first plane;

Figures 11a to 11c are top views of the mounting and movement head illustrating adjustment of the mounting and movement head in a second plane orthogonal to the plane of the section of figures 10a and 10b;

Figures 12a to 12c are cross-sectional views along part of section X - X of figure 3 which illustrate the invention in its second aspect as the upper support arm pivots;

Figures 13a to 13g are schematic views of the geometric relationship between the different components of the device of figure 1 and wherein figure 13a is an exploded side view of the arm 4, figure 13b is a side cross-sectional view through the mounting head, figure 13c is a side cross-sectional view through the mid-joint 31, figure 13d illustrates the geometry at the proximal end of the support arm, figure 13e illustrates the geometry of the support arm and its pivots, and figure 13g illustrates the geometry at the distal end of the support arm;

Figures 14 and 15 illustrate the variation in torque created about the pivot on the bottom end of the upper arm of figures 1 to 12 by the weight of, for example, a monitor mounted at its upper end, as the support arm pivots about that pivot at its bottom end;

Figures 16 to 18 illustrate how the torque of figures 13 and 14 is opposed in known support device arrangements;

Figures 19a to 19c are cross-sectional views similar to those of figures 12a to 12c illustrating the invention in its third aspect;

Figures 20 and 21 illustrate how the torque created at the pivot by the weight of a load on the lower end of the upper support arm is opposed in the arrangement of figures 1 to 12, and 18;

Figure 22 is a schematic side view of a further embodiment of a support system in accordance with the invention;

Figure 23 shows the support system of Figure 22 from the front; and

Figure 24 is a schematic side cross-sectional view of the devices of figures 22 and 23.

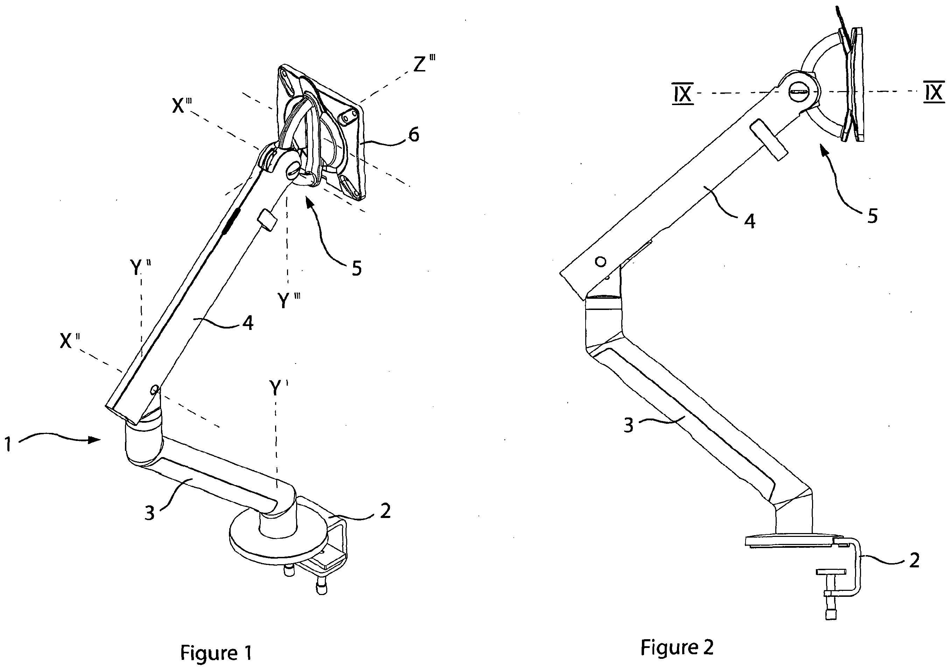

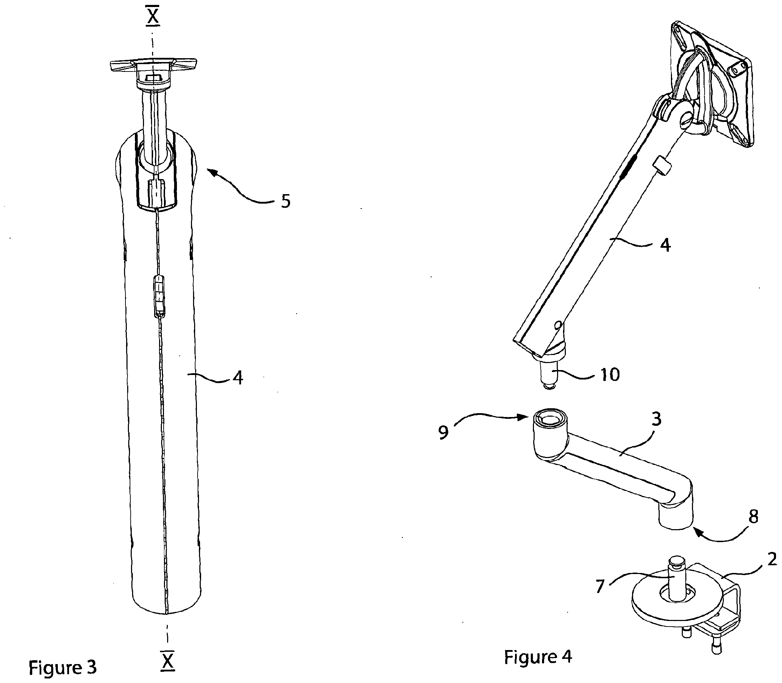

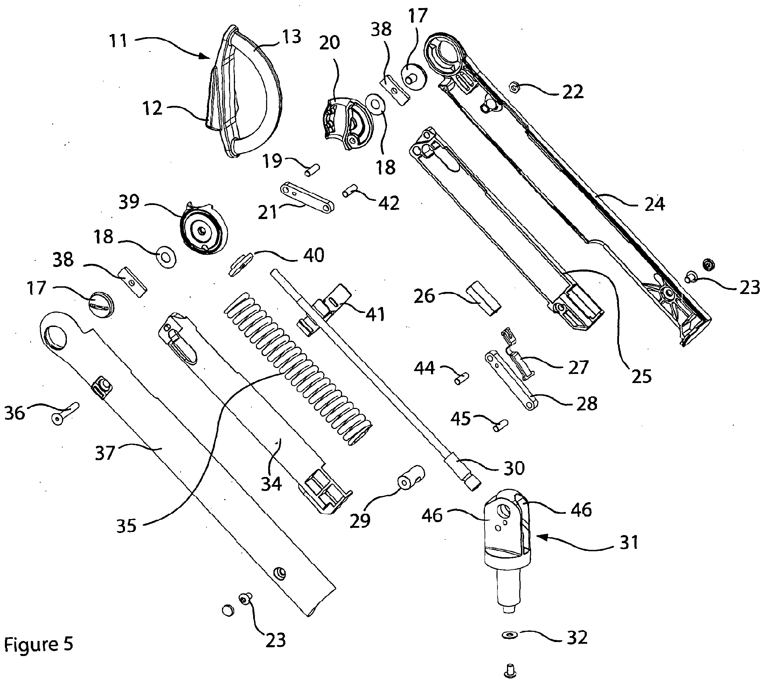

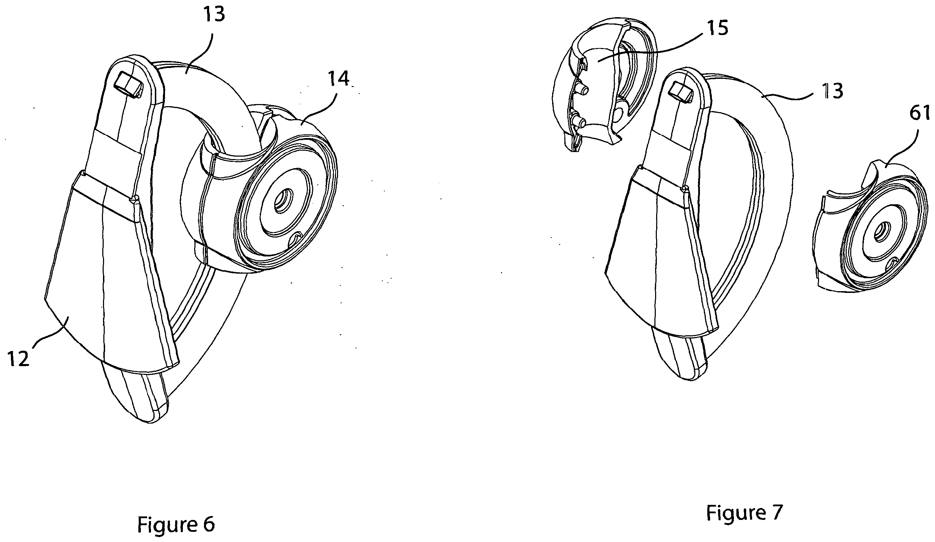

Referring to figures 1 to 3, a support device 1 includes a table securing element 2, a lower arm 3, upper arm 4, monitor mounting head and pivot 5, and a monitor plate 6 for securing to the back of a monitor to be supported (not shown). The table securing element 2 has a screw or clamp arrangement for removably securing the element 2 to a table or other surface and an upstanding pin 7 received within a corresponding hole 8 in the end of the lower arm 3 such that the lower arm 3 can rotate about a vertical Y' axis (see figure 1) relative to the table securing element 2. The lower arm 3 then has a hole or female coupling 9 at its upper end to receive a pin or male coupling 10 at the bottom end of the upper arm 4. The upper arm 4 can rotate about a vertical axis Y" (see figure 1) relative to the lower arm 3 by virtue of this pin and hole engagement.
Referring to figure 1, the lower arm 3 can rotate relative to the table securing element 2 about a vertical axis Y', the upper arm 4 can rotate relative to the lower arm 3 about a vertical axis Y" and a horizontal axis X", and (as discussed in more detail below) the mounting head 5 can rotate relative to the distal end of the upper support arm 4 about two orthogonal axes (one substantially horizontal axis X''' and the other substantially vertical axis Y'''). The monitor supporting head 5 can also rotate about a horizontal axis Z''' orthogonal to the X''' and Y''' axes.
Referring to figures 5 to 8, the mounting head 5 comprises a movement joint hoop 11 with a fixing portion 12 for slidable engagement with the monitor supporting plate 6, and an elongate curved member, arc or hoop segment 13 of substantially circular cross-section. A motion joint 14 with an internal circular bearing surface 15 corresponding to the circumference of the curved member 13 is positioned on the curved member 13 and can move along the hoop segment or curved member 13 and rotate around the hoop segment. The motion joint 14 is a two-part plastics moulding. The plastics moulding is held between two projecting portions 16 at the distal end of the upper support arm 4. Slotted screws 17 apply pressure to the outside of each side of the moulding via rectangular nuts and Belleville washers 18 so that the motion joint is frictionally engaged on the hoop.

The projecting arms 16 can rotate relative to the motion joint 14 such that the support arm can rotate about horizontal axis X'''. Projecting portions 60 on the inside of the upper arm projections 16 engage a track 61 on the motion joint 14 to allow this relative rotation about axis X'''.

Referring to figure 5, the support device 1 includes movement joint hoop 11, distal front link pivot pin 19, proximal front link pivot pin 42, motion joint moulding left half 20, motion joint adjustment screws 17, Belleville washers 18, front link 21, thin hex nut 22, mid joint button screws 23, upper arm casting left half 24, spring slider moulding left half 25, friction pad 26, anti-finger trap moulding 27, power link 28, mid joint pivot pin 29, force adjustment screw 30, mid joint 31, steel washer 32, spring slider moulding right half 34, compression spring 35, head screw 36, upper arm casting right half 37, rectangular nuts 38, motion joint moulding right half 39, spring nut plate 40 and cable management clip 41.

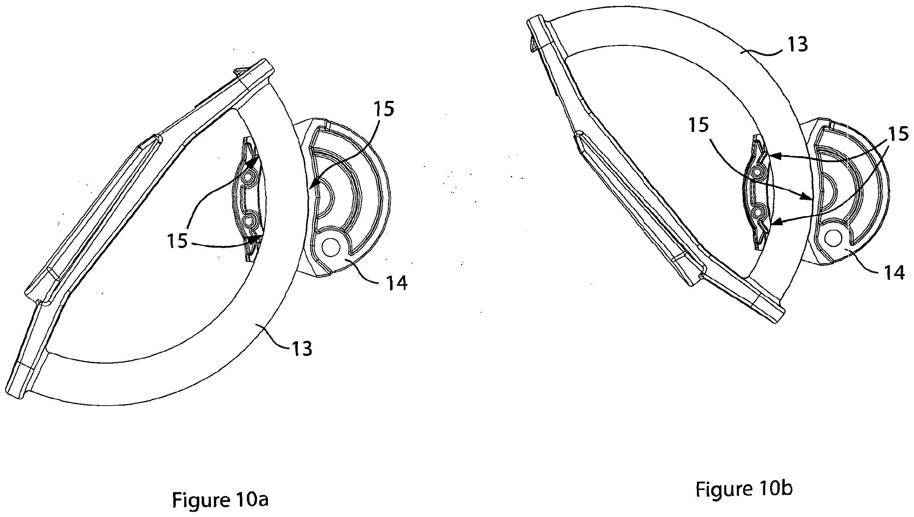

As illustrated in figures 10a and 10b, the motion joint 14 can move relative to the curved member 13. In this application we will usually refer to movement of the motion joint along the hoop or hoop segment. This expression refers to relative movement in a direction along the curvature of the curved member 13 and includes movement of the motion joint with the hoop remaining still, movement of the hoop with the motion joint remaining still and movement of both the motion joint and hoop.

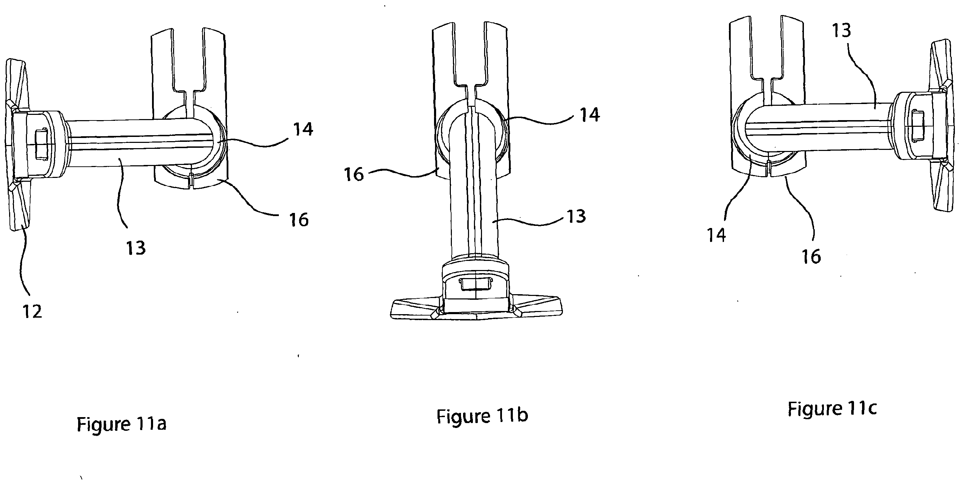

In a particularly preferred embodiment of the invention, the curved member 13 lies on the circumference of a circle whose centre lies at or near the centre of gravity of the monitor or other element being supported on the mounting head. This reduces the magnitude of the frictional force which the bearing surfaces 15 of the motion joint must apply to the surface of the curved member 13 in order to hold its position on the hoop. As illustrated in figures 11a to 11c, the motion joint 14 can also rotate relative to the curved member 13 and a combination of the movement along and about the curved member 13 means that, for example, a monitor (not shown) on the mounting head 5, can be rotated about orthogonal X''' and Y''' axes. In this application we usually refer to rotation of the motion joint about the hoop. This expression refers to relative rotation about a curved axis running down the middle of the curved member 13 and includes rotation of the motion joint with the hoop remaining still, rotation of the hoop with the motion joint remaining still and rotation of both the motion joint and hoop.

The mount fixing portion 12 is held in a turntable like portion of the monitor supporting plate 6 such that the monitor supporting plate 6 can rotate relative to the mount fixing portion 12 about axis Z''' (see figure 1).

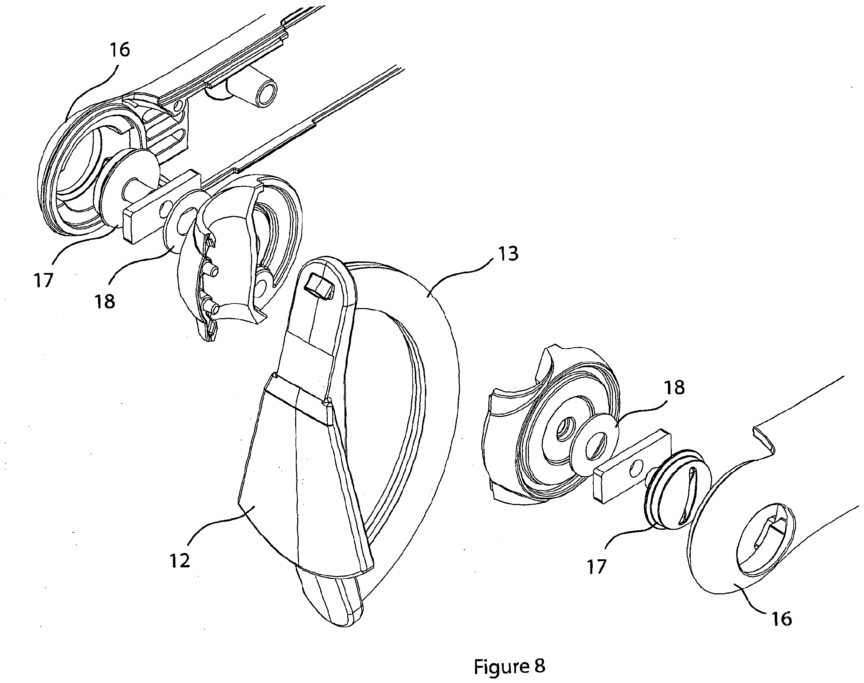

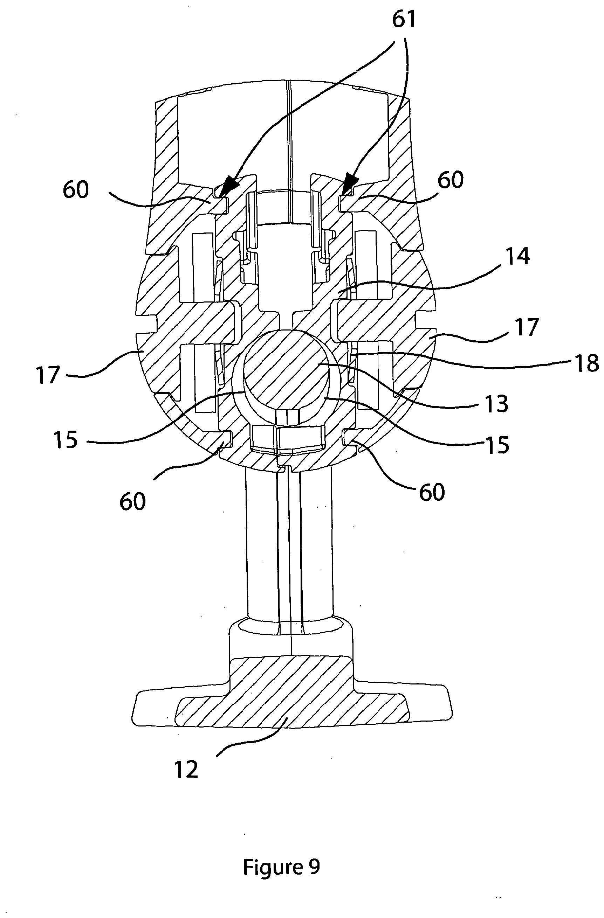

The upper support arm 4 is a two-part metal casting whose two halves 24, 37 are held together by a screw and nut coupling 36, 22 towards the distal end of the upper support arm and a pair of proximal mid-joint button screws 23 which each pass through a pair of holes in the upper end of the mid joint 31 and engage opposite ends of the mid joint pivot pin 29 so that the upper support arm 4 can pivot about that mid joint pivot pin 29 and hence about horizontal axis X'' (see figure 1). The distal end of each half of the upper support end casing forms one half 16 of a U-shaped motion joint fixing portion so that together the two halves of the casting capture the motion joint 14 as described above (see figures 8 and 9). An upper support arm front link 21 is mounted at its distal end on the distal front link pivot 19 held between the two halves 20, 39 of the motion joint 14 and at its proximal end on a proximal front link pivot pin 42 pivotally mounted on the distal end of a sliding carriageway or spring slider 43 supported within the upper arm casing. The spring slider 43 is a two-part moulding 25, 34 and the proximal front link pivot pin 42 is held between the distal ends of the two halves to support the front link 21. When the device is assembled, the slider 43 moves along the longitudinal axis L of the support arm 4 without a component of movement perpendicular thereto. The described embodiments have the spring slider 43 inside the support arm; it could also be arranged around or alongside the upper support arm 4 provided that it moves along or parallel to the longitudinal axis L of the upper support arm 4 with no significant component of movement perpendicular thereto.

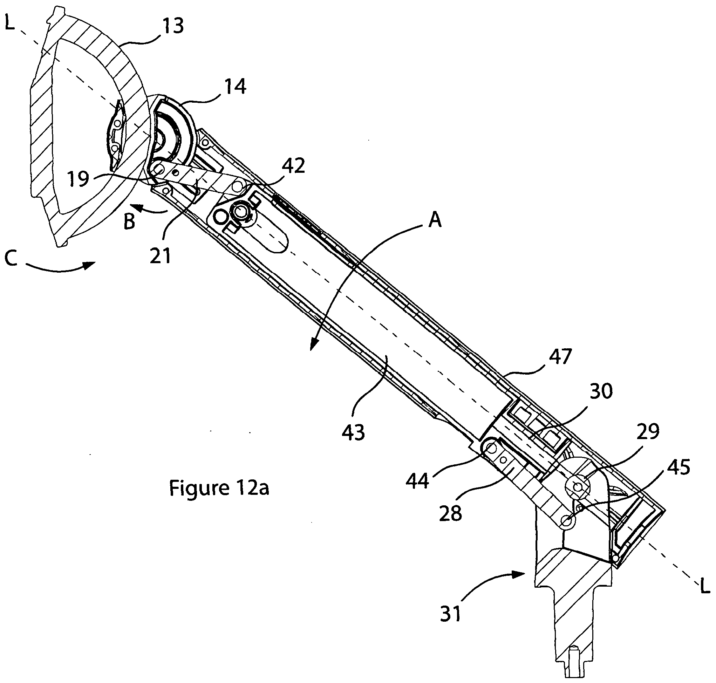

The spring slider 43 has a compression spring 35 (not shown in figures 12a to 12c) inside it which engages at its distal end with a spring nut plate 40 mounted on the distal end of a force adjusting screw 30. At initial set up or final manufacture of the support device 1, the force adjustment screw is set to define a particular separation between the spring nut plate 40 and the proximal end of the spring slider 43. This defines the length of the space for the compression spring 35 and hence determines the force supplied by the spring 35. The force adjusting screw 30 can adjust the position of the spring nut plate 40 within the spring slider moulding and thereby increase or decrease the length of the compression spring and hence, respectively, decrease or increase the force that spring will apply to the spring slider and spring nut plate, and hence to the rear power link 28 pivotally connected to the proximal end of the spring slider 43 against which the proximal end of the spring 35 acts.

The rear power link 28 is arranged between the proximal end of the spring slider 43 and the mid-joint 31 so as to transmit the force from the compression spring 35 to the mid-joint 31. The rear power link 28 is connected to the spring slider 43 at the rear power link's distal end by a distal rear link pivot pin 44 held between the two moulding halves 25, 34 of the spring slider 43 and is connected to the mid-joint 31 by a proximal rear link pivot pin 45 held between two upstanding portions 46 of the U-shaped mid-joint 31. The rear power link proximal pivot 45 is located on the mid-joint below the upper arm pivot point 29 and at a position forward or distal from the vertical axis passing through that support arm pivot point 29.

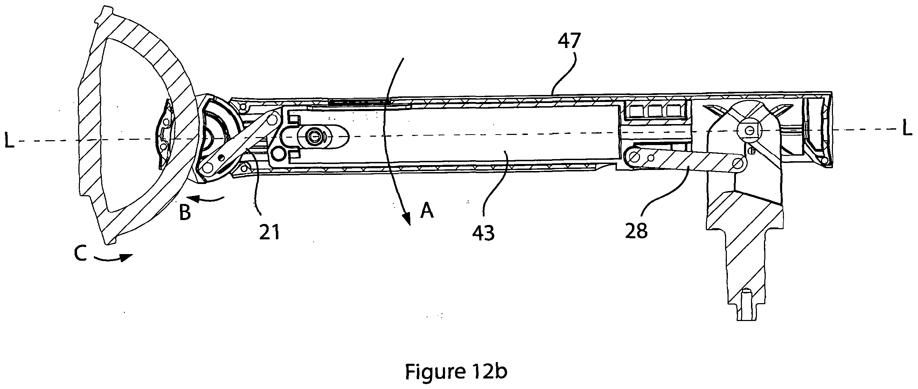

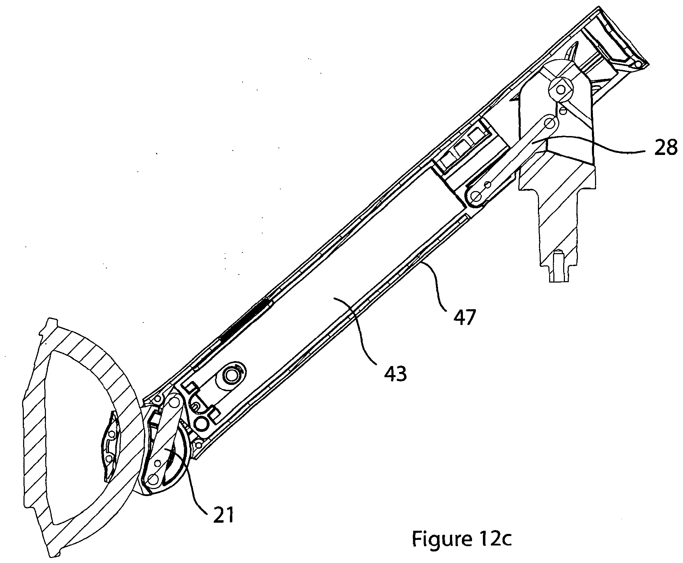

As will be discussed in more detail below, the combination of the support arm outer casing 47 pivotally coupled at its proximal end to the mid-joint 31 and at its distal end to the motion joint 14, combined with the internal slider 43 coupled at its distal end via the front link 21 and at its proximal end via the rear power link 28 means that a monitor supported on the mounting head remains in substantially the same plane as the upper support arm 4 pivots about the mid-joint 31 in the manner shown in figures 12a, 12b and 12c.

Referring to figures 12a to 12c, as the upper support arm pivots about the mid-joint pivot pin in direction A from, for example, the position shown in figure 12a to the position shown in figure 12b (or, for example, the position shown in figure 12b to the position in figure 12c), the rear power link 28 pushes the slider 43 in the support arm casing 47 towards the motion joint 14. This then causes the front link 21 to push its pivot point on the motion joint forward. As the distal front link pivot pin 19 is located on the motion joint 14 at a point below the pivot or axis of rotation X''' between the motion joint 14 and the support arm outer casing 47, this causes the motion joint 14 to rotate in direction B relative to the support arm casing 47 and thereby reduce or prevent tilting of the monitor relative to its original plane. If there were no movement of the motion joint in direction B relative to the support casing, a monitor held on the mounting head would tilt in direction C as the support arm was rotated in direction A.

Slider 43 can slide freely along support arm casing 47, along the centre or longitudinal axis L of the bar or force adjustment screw 30. In the illustrated embodiment, the slider 43 is inside the support arm casing 47 but it is also possible to have the slider 43 and associated links and pivots arranged outside and around the casing 47. As the upper support arm moves through its range of motion (for example, in direction A from about 40' above the horizontal, as shown in figure 2a to about 40° below the horizontal as shown in figure 12c), slider 43 slides along and relative to the arm casing 47 at a certain rate (i.e. distance along arm casing per degree of rotation). This sliding rate is defined by the geometry of the rear power link 28, the position of the proximal rear link pivot pin 45 relative to the mid-joint pivot pin 29, and the position of distal rear link pivot 44 relative to the centre longitudinal axis of the bar 30. The rotation in direction B is at a defined rate (i.e. angle of rotation per measure of distance moved by slider 43 along the central axis of the arm). This rate of rotation is defined by the geometry of the front link 21, the front link distal pivot 19, the pivot X''' (see figure 1) and the front link proximal pivot 42 relative to the centre axis L.

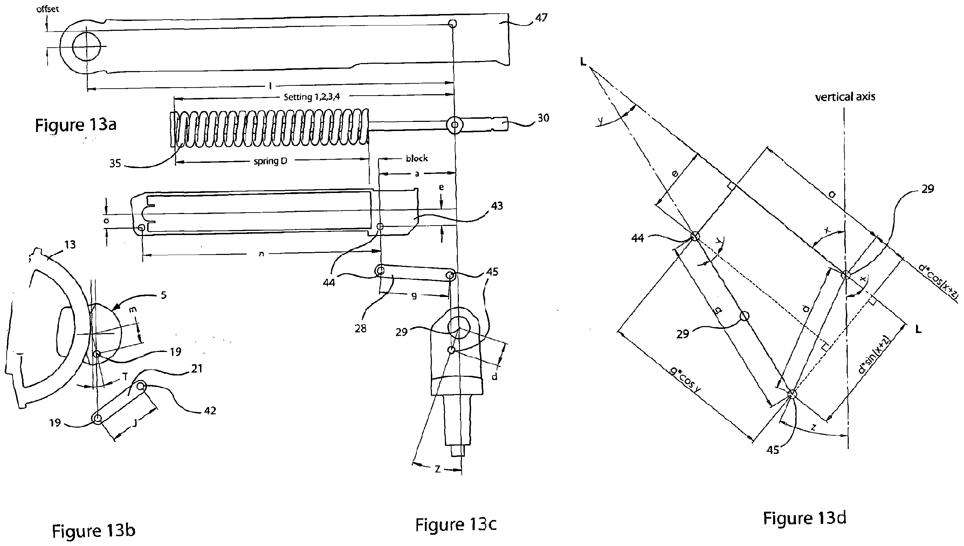

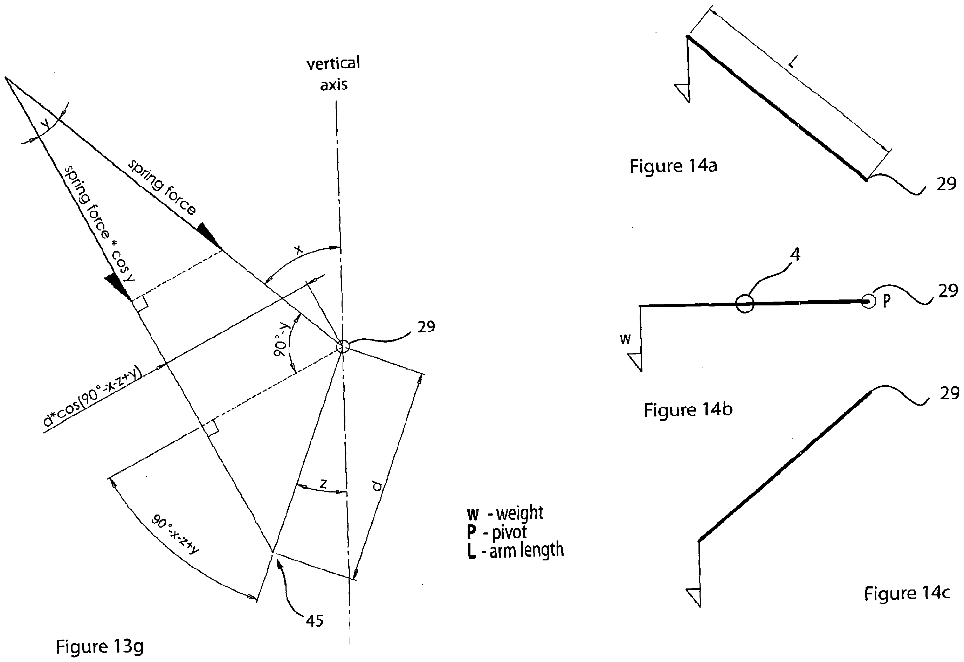

Referring to figures 13a to 13g, the distances or values d, z, e, g, l, n, o, offset, m, j. In length and k, d - distance between mid-joint pivot 29 and proximal force transmission link pivot 45; z - angle to vertical of the straight line between mid-joint pivot 29 and proximal force transmission link pivot 45; e - distance along perpendicular line from (longitudinal axis of support arm) to distal pivot 44 of proximal link 28; g - length of proximal force transmission link 28 between its respective pivots; l - distance between proximal and distal support arm pivots 29, X'''; n - component along support arm longitudinal axis between proximal pivot 42 of distal link 21 and distal pivot 44 of proximal link 28; o - distance along perpendicular line from (longitudinal axis of support arm) to proximal pivot 42 of distal link 21; offset - the perpendicular distance of the pivot point of the motion head from the longitudinal axis; m - the parallel distance between the pivot point of the motion head and the pivot point 19; j - length of distal link 21 between its respective pivots 19, 42'; In length - free spring length (i.e. length of unloaded spring); K - spring constant, are all constant as the upper support arm 4 pivots about pivot pin 29; the values of $x$, y, a, Spring D, p, f, B1, B2, angle C and (not shown in figures 13a to 13g) Spring force W, x - angle between longitudinal axis of arm and vertical; y - angle between longitudinal axis of arm and line between the pivots of the force transmission link 28; a - distance along longitudinal axis of arm between link distal pivot 44 and mid-joint pivot 29; Spring D - stressed spring length; p - distance along longitudinal axis of arm between distal link proximal pivot 44 and mounting head pivot X'''; f - parallel distance between pivot 42 and cross-section between centre line of motion joint surface 15 and vertical line motion head; B1 - angle between longitudinal axis of arm and line between mounting head pivot X''' and distal link proximal pivot 43; B2 - angle between line between mounting head pivot X''' and distal link proximal pivot 43, and line between mounting head pivot X''' and distal link distal pivot 19; T - tilt angle (angle between line between vertical and line between mounting head pivot X''' and distal link distal pivot 19; angle C - angle between line between mounting head pivot X''' and distal link distal pivot 19, and line between the pivots 19, 42 of the distal link 21), however vary as the arm 47 rotates or pivots about pivot 29, thorough angle x.

As the slider 43 holds distal rear link pivot 44 and proximal front link pivot 42 a fixed distance or apart, pivots 42 and 44 will move at the same rate which, as discussed above, is defined by the geometry of the rear power link 28, proximal rear link pivot 45, mid-joint pivot 29, distal rear link pivot 44 and the centre line through the slider 43, support arm casing 47 and axis L of the bar 30 (along which all three move relative to each other).

As pivot 42 moves forward at the defined rate set by the geometry of the various elements at the proximal end of the slider 43 and support arm casing 47, front link 21 converts this sliding action to a rotation in direct B about axis X''' (see figures 1 and 12a to 12c).

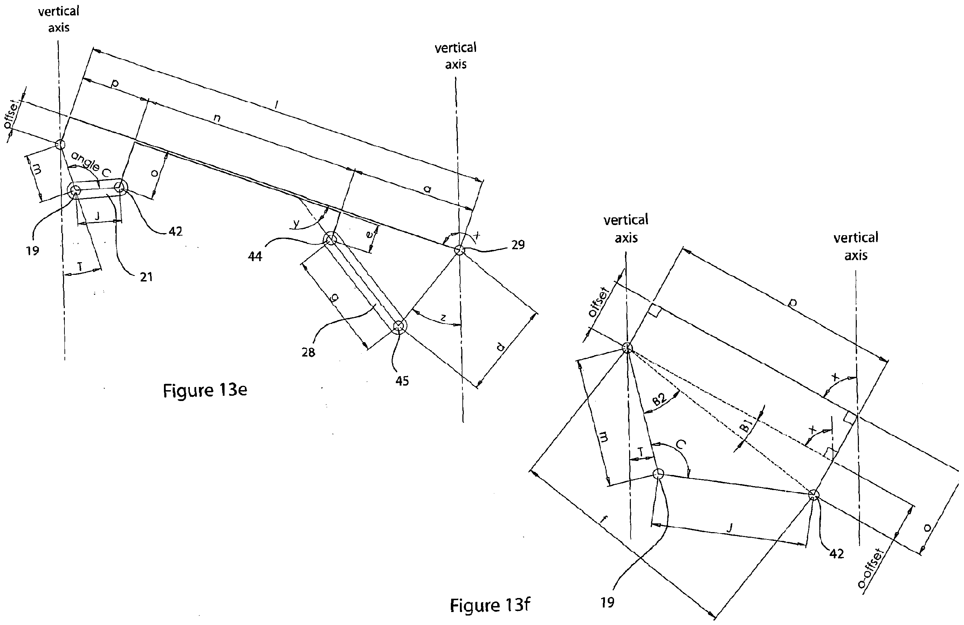

As the arm 4 rotates, the aim is to keep angle T (see figures 13e and 13f) constant or almost constant so that, for example, a monitor on the mounting head is at the same angle as the arm is rotated. In practice the angle T is selected so that the monitor tilts 5 degrees upwards as this allows for any tolerances/variations in the assembly of the support arm. Experience also suggests that the market perception of a monitor arm is better if the screen points up slightly rather than points down (as this gives the impression of drooping).

The inter-relationship between the various parameters illustrated in figures 13a to 13g is defined by the following equations;

$$p = l - n - a \qquad (1)$$

$$f = \sqrt{P^2 + (o - offset)^2} \qquad (2)$$

$$B1 = a\tan\left(\frac{o - offset}{p}\right) \qquad (3)$$

$$\cos(B2) = \frac{m^2 + f^2 - J^2}{2mf} \qquad (4)$$

$$T = x - B1 - B2 \qquad (5)$$

$$\cos C = \frac{m^2 + J^2 - f^2}{2mj} \qquad (6)$$

As shown in, for example, figures 1, 12a, 12b and 12c, in order to raise and/or lower a monitor (not shown) fixed to the mounting head 14 relative to the lower arm 3 and hence the table surface on which the support device 1 is mounted, the upper support arm 4 can be rotated from its highest position (see figure 12a), approximately 45 degrees above the horizontal down to its lowest position (see figure 11c), approximately 45 degrees below the horizontal. The spring 35 inside the support arm 4 acts on the mid-joint 31 via the rear link 28 to produce a torque which counter-acts the torque produced by the weight of the monitor.

As can be seen from figure 14, the distance of the monitor from its centre of gravity to the mid-joint pivot P, is at its greatest when the upper support arm is horizontal (figure 14b) and at its lowest when the monitor is in either its uppermost (figure 14a) or lowermost (figure 14c) positions.

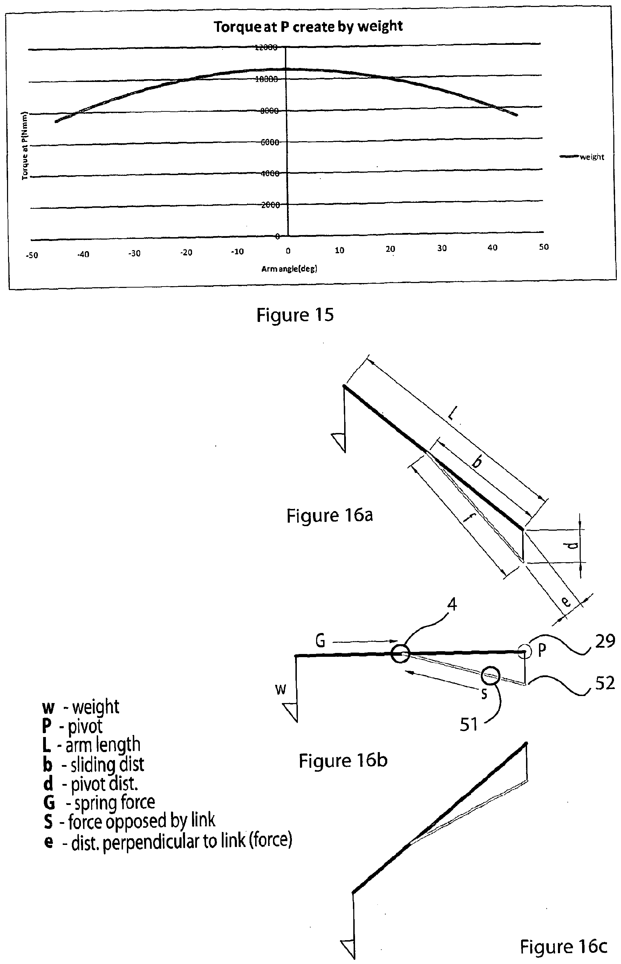

This means that (as shown in figure 15) the torque at the mid joint pivot 29 (P in figures 14 and 16) created by the monitor weight is at a maximum when the arm angle to the horizontal is 0° and at a minimum at the ends of its range of movement which are +45° and -45° in the illustrated example. The graph of figure 15 is an illustration of the magnitude of the torque at P (i.e. pivot point 29) created by a monitor weight which assumes a monitor weight of 40N, an arm length of 265mm and a range of movement of +/- 45° from the horizontal.

The known arrangements (see figure 16) for opposing the torque created at the pivot point 29 by the load at the distal end of the support arm use a spring force G created by either a mechanical spring or gas spring inside the upper support arm 4. This spring force G is transmitted via a rear power link 51 of length f which acts through proximal rear link pivot point 52 at a distance d vertically below the main support arm pivot point P (or 29). The torque T at P generated by the spring force G is the product of the force S in the rear link 51 and the distance d. Force S is equal to the component of spring force G along the direction of the rear power link.

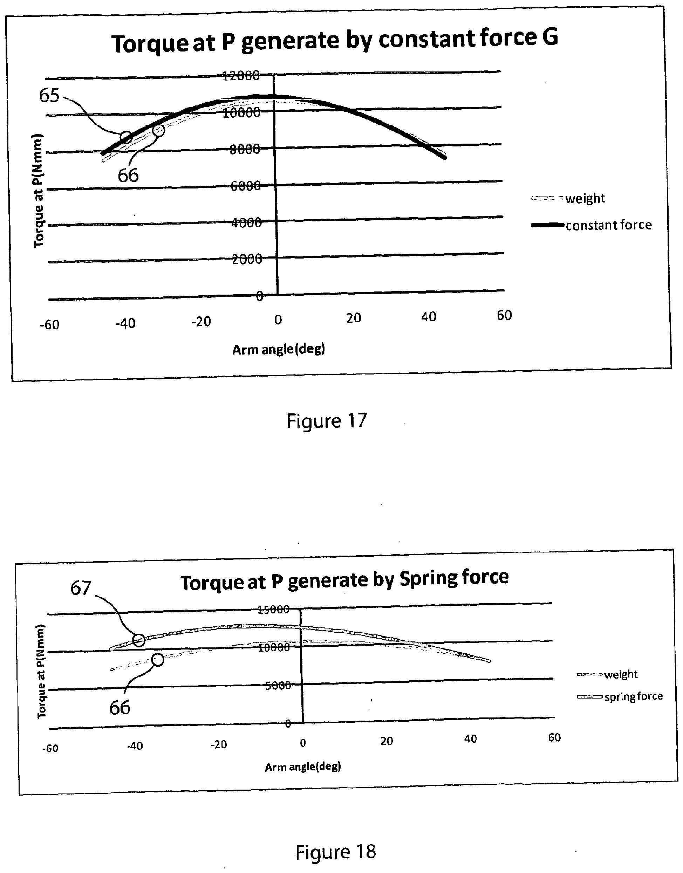

Referring to figure 17, if the spring force G is constant and the range of movement of the support arm is +/-45° from the horizontal, then the variation in T is as shown in figure 17 by the constant force line 65. The torque T varies as the support arm pivots because the component of the spring force G along the direction of the rear power link 51 varies as this pivots relative to the upper support and the direction of the spring force G. As can be seen in figure 17, the torque created by the constant spring force in the known arrangement of figure 16 does not vary in the same way as the torque created by the weight of the load W (line 66 in graph). In particular, the peak weight opposing torque 62 (i.e. the torque produced by the spring force G) is not at the same position as the peak torque created by the load weight. Furthermore, if the spring force is created by a mechanical spring such as a compression spring, the differences are even greater (see figure 18 wherein the variation in torque from a compression spring is line 67)). This is because the magnitude of the spring force G varies as the spring is compressed to varying degrees as the upper support arm rotates.

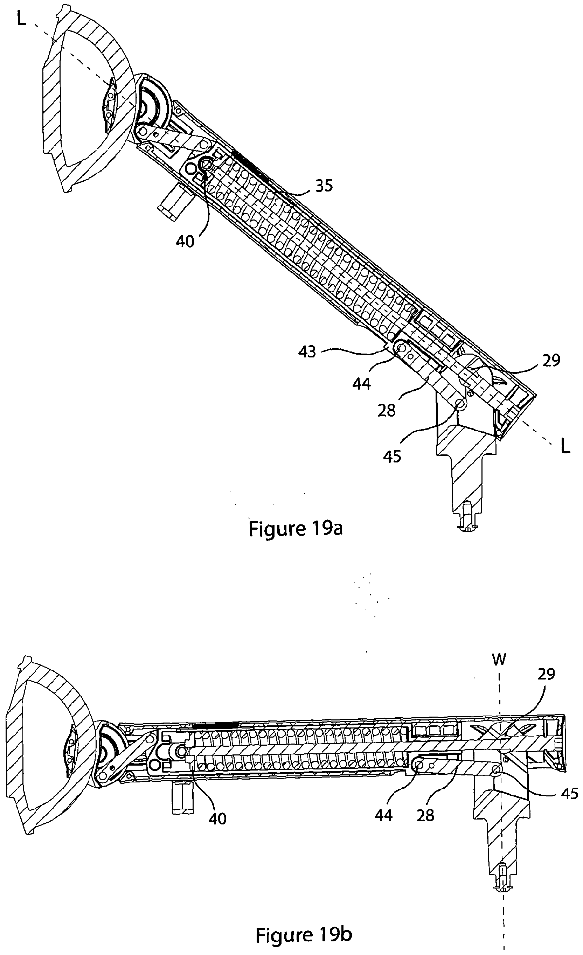

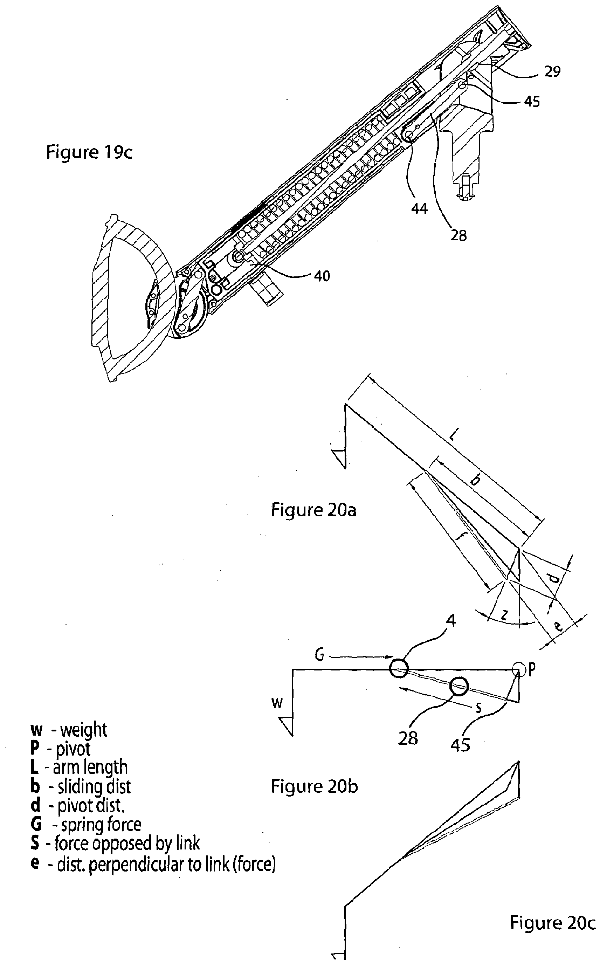

In the embodiment of the invention shown in figures 1 to 11 and 18, the torque produced by the weight of the monitor (see figures 19 and 20) is opposed by a torque which is the product of the spring force created by the compression spring 35 in the rear power link 28 and the perpendicular distance e between the line of that force and the proximal power link pivot 45.

Referring to figures 13a to 13g and 20a to 20c:

$$sin y \simeq \frac{d sin(x+z) - e}{g} \qquad (7)$$

$$a = g cos y - d \cos(x + z) \qquad (8)$$

$$SpringD = setting_n + block - a \qquad (9)$$

$$Spring\ force = (In\ length - Spring\ D).K \qquad (10)$$

where: In length = unstressed spring length (i.e. free/initial spring length)

Spring D = stressed spring length (this is an instantaneous value as can be taken at any point in the movement)

K = Spring constant

The torque $\omega$ at the pivot 29 resulting from that spring force is then given by

$$\omega = \frac{Spring\ force.cos y.\cos (90° - x - z + y).d}{l.\sin x} \qquad (11)$$

The dimensions of the support arm and its associated elements, (i.e. d - distance between mid-joint pivot 29 and proximal force transmission link pivot 45; z - angle to vertical of the straight line between mid-joint pivot 29 and proximal force transmission link pivot 45; e - distance along perpendicular line from longitudinal axis of support arm to distal pivot 44 of proximal link 28; g - length of proximal force transmission link 28 between its respective pivots; l - distance between proximal and distal support arm pivots 29, X'''; n - component along support arm longitudinal axis between proximal pivot 42 of distal link 21 and distal pivot 44 of proximal link 28; o - distance along perpendicular line from longitudinal axis of support arm to proximal pivot 42 of distal link 21; offset - the perpendicular distance of the pivot point of the motion head from the longitudinal axis; m - the parallel distance between the pivot point of the motion head and the pivot point 19; j - length of distal link 21 between its respective pivots 19, 42'; In length - free spring length (i.e. length of unloaded spring); K - spring constant) are selected so as to try and best match the twin objectives of keeping angle T roughly constant through the range of motion of the support arm, and of closely matching the torques about the pivot 49 exerted by the weight of a load such as a monitor on the mounting head 14 and that exerted by the spring force through the range of motion of the support arm. Friction acts at two main points: between the slider 43 and outer casing 47 and also at the mid-joint 29. Increased spring load leads to increased friction but it is not necessary to precisely determine the exact friction levels as frication is used as an aid to provide a degree of tolerances to the functioning system.

The inventors of the subject invention have appreciated that it is possible to match the torque created by the spring force of a spring within the support arm to the torque created by a load weight without the use of a cam such as used in the prior art by careful selection of the arm geometry and that a support arm with a slider moveable along its centre axis with rear and front link pivots combined with the freedom to locate the rear link proximal pivot 45 of a point other than vertically below the support arm proximal pivot 29 allows for the selection of a geometry loading to a sufficiently close match. The inventors have appreciated that frictional forces means that a perfect match is not necessary and that the standard construction with a rear link power pivot vertically underneath the main support arm proximal pivot was sub-optimal.

The selection of the support arm geometry is done by a targeted graphical method. For a live load the torque about pivot 29 is determined for different support arm positions and plotted as a graph similar to that of figure 15.

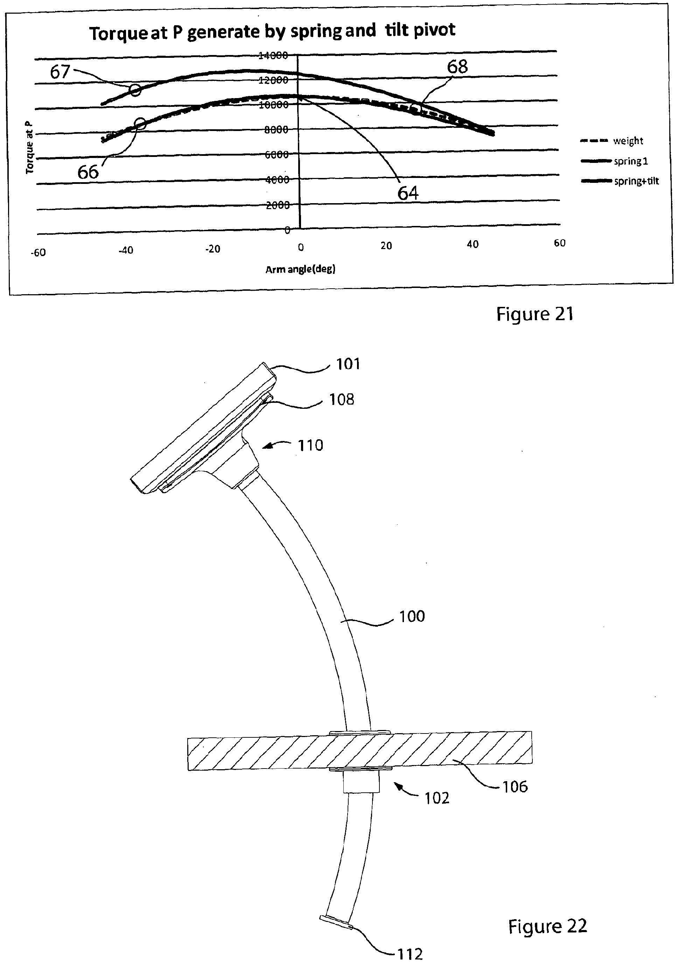

The counter-balancing torque is given by equation 11. Values for each of the relevant constant (i.e. constant as the arm rotates) parameters are selected iteratively limited by the range of values of each which are possible and appropriate for the arm's function and aesthetics. Each set of those selected values is input into equations 7 to 11 for a series of different values of the angle x (and hence of other variable angles and lengths which vary as the arm rotates) to generate a graph similar to that of figure 21. The fixed or constant values (i.e. d - distance between mid-joint pivot 29 and proximal force transmission link pivot 45; z - angle to vertical of the straight line between mid-joint pivot 29 and proximal force transmission link pivot 45; e - distance along perpendicular line from longitudinal axis of support arm to distal pivot 44 of proximal link 28; g - length of proximal force transmission link 28 between its respective pivots; I - distance between proximal and distal support arm pivots 29, X'''; n - component along support arm longitudinal axis between proximal pivot 42 of distal link 21 and distal pivot 44 of proximal link 28; o - distance along perpendicular line from longitudinal axis of support arm to proximal pivot 42 of distal link 21; offset - the perpendicular distance of the pivot point of the motion head from the longitudinal axis; m - the parallel distance between the pivot point of the motion head and the pivot point 19; j - length of distal link 21 between its respective pivots 19, 42'; ln length - free spring length (i.e. length of unloaded spring); K - spring constant) are then varied iteratively until the line on the graph of the torque generated by the spring force of figure 21 closely matches the line on the graph of the torque generated by the load of figure 15.

The illustrated embodiment of the invention has a force adjustment screw 30 which can pre-stress the spring 30 which can pre-stress the spring 35 to a different extent and thereby also affect the torque about pivot 29 resulting from the spring force. The matching exercise described above is therefore repeated for a number (say 4) of different pre-stresses which would correspond to different monitor weights or loads as a check that a selected geometry can also match different loads and degrees of appropriate pre-stressing of the spring 35.

Once a geometry which closely matches torque is achieved, equations 1 to 6 are used to plot a graph of T and the same iterative process is used to find geometry values for which T remains roughly constant during the range of movement of the arm. This may require some modification of the values determined by the first stage of iteration so it may be necessary to repeat that first process of matching torque lines or a graph until a geometry which best matches the twin requirements of constant T and matching torque ω is achieved.

As shown in figures 19a to 19c, in the described embodiment, the proximal rear power link pivot pin 44 of the described embodiment of the invention is located forward (or distal) from the axis W (see figure 19b) through the mid-joint pivot 29 which is orthogonal to the longitudinal axis of the upper support arm at the mid point of range of movement of the upper support arm; i.e. the proximal rear link pivot 44 is forward of a vertical axis through the mid-joint pivot 29 when the upper support arm can move between +/- 45° to the horizontal. The inventors have determined that locating the rear power link pivot pin 44 forward or back from the vertical through the mid-joint pivot 29 allows for a better match of the torque exerted by the spring force about the pivot 29 to the torque exerted by the weight of a load on the mounting head 14 as the support arm moves through its range of motion.

As illustrated in figures 20 and 21 where line 68 illustrates the variation in torque created about the pivot pin 29 by the compression spring 35 acting via the rear power link 28, this position of the proximal rear power link pivot pin 4 moves the peak torque about mid-joint pivot 29 created by the spring 35 acting through the rear power link 28. Careful selection of the geometry and/or dimensions of the element (and their relative geometry and dimensions) making up the proximal end of the upper support arm 4 (including the rear link 28; pivots 29, 44, 45), the spring properties and the load weight allow one to move the position of peak opposing torque 64 (see figure 21) to a position closer to the position of the peak load weight torque of line 66.

The placing of the proximal pivot 45 for the rear link at a position forward or distal from the vertical line through the proximal support arm pivot 29 (i.e. forward or distal from the line or axis along which gravity acts means that the perpendicular distance e varies in a manner which is closer to the variation in the torque caused by the weight of the monitor than is the case in the known arrangements which have the rear link pivot point in line with a vertical line through the proximal support arm pivot.

Referring to figures 19a to 19c, as the support arm 4 rotates from its uppermost position (see figure 19a), through the mid-position (see figure 19b) down to its lowermost position (19c), the rear power link 28 progressively compresses the spring 35 by pushing it against the fixed spring nut plate 40. This means that the force provided by the spring 35 progressively increases as the support arm 4 is lowered in a manner similar to that discussed above in connection with figure 18.

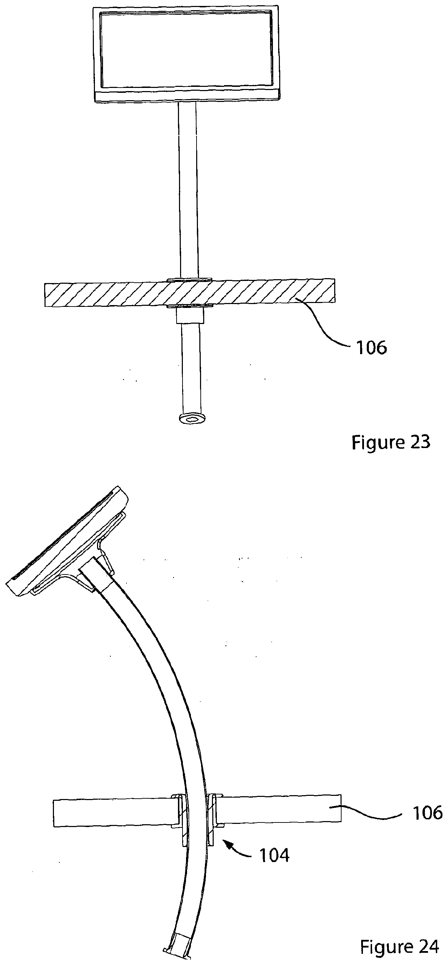

A further embodiment is shown in Figures 22 - 24 of the drawings.

Whilst it is usual to mount the display device on a support arm, there are some situations in which it may be desirable for the display device to be stored flat against, or in a recess so that it flush with, a surface such as a wall or table-top when it is out of use, but to be movable away from the surface to a more comfortable position for viewing when in use. A support system utilising the invention intended for these circumstance is shown schematically in Figures 22 to 24.

The embodiment of Figures 22 to 24 differs from those described above in that the support arm and hoop element are replaced by a single curved arm 100 which is of circular cross- section along its entire operative length. The curved arm 100 cooperates with a motion joint 102 generally similar to motion joint 14 described above.

The internal features of motion joint 102, in particular, the internal bearing surface which engages the external surface of the curved arm 100, are the same as those of motion joint 14, but the external casing 104 of the motion joint 102 is designed to allow it to be mounted securely in a through opening formed in, as shown in the drawings, a generally horizontal surface such as a tabletop 106. For example, the outer casing 104 may be formed in two parts, each provided with an outwardly-extending annular flange, so that when the two parts of the casing 104 are secured together, the margin of the tabletop 106 around the through opening is trapped between the flanges to secure the casing 104 in the through opening. Alternatively, the casing 104 may be secured by other means such as gluing.

Although Figures 22 to 24 show the support system being used to mount a display device 101 relative to a generally horizontal surface, it will be understood that a similar arrangement may be used in respect of generally vertical surfaces such as walls or, indeed, in relation to inclined surfaces.

The display device 101 is secured to the curved arm 100 by means of a suitable mounting plate 108. Whilst this may serve simply to hold the display device 101 on the end of the curved arm 100 in a fixed position, the mounting plate 108 preferably includes a bearing 110 so that the display device 101 can be rotated at will about the end of the circular-section curved arm 100. This not only allows fine adjustment of the viewing position of the display device 101 in use but also facilitates stowing of the display device 101 neatly against the tabletop 106 or in a recess, where one is provided, when it is no longer needed.

The end of the curved arm 100 remote from the display device 101 is provided with an end cap 112 of larger diameter than the curved arm 100 which acts as a stop to prevent the curved arm 100 being drawn all the way through and removed from the motion joint 102.

In use, the curved arm 100 can be moved through the motion joint 102, overcoming the friction exerted by the internal bearing surface, until the display device 101 is a suitable distance from the surface of the tabletop 106. The frictional engagement of the internal bearing surface with the cylindrical surface of the curved arm 100 will then prevent the arm 100 sliding back through the motion joint 102. The position and orientation of the display device can then be adjusted further either by rotation of the curved arm 100 about its axis within the internal bearing surface of the motion joint 102 or by rotation mounting plate 108 of the display device 101 about the central axis of the end of the curved arm 100, or both.

When the display device is no longer needed, it can simply be returned to its original position against, or housed in a recess formed in, the tabletop 106. The curved arm 100 can be hollow so that cables can be fed through it.

**Claims**

1. A support system for pivotably supporting a load such as a display device, the system comprising an elongate curved member (13) and a motion joint (14,104) slidable along, and rotatable about the curved member (13), **characterised in that** the curved member has a substantially circular cross-section and the motion joint has an internal bearing surface corresponding to the circumference of the curved member.

2. A support system according to claim 1 wherein the elongate curved member is an elongate curved member (13) provided with at least one axially-extending, at least part cylindrical operative surface for engaging with the internal bearing surface of the motion joint; the internal bearing surface of the motion joint (14,104) being at least part cylindrical and being adapted to frictionally engage the or each operative surface of the curved member so as to allow a load secured to the curved member to be supported in a selected longitudinal position of the curved member relative to the motion joint; the curved member being rotatable about the axis of the operative surface within the internal bearing surface to further adjust the position and/or orientation of the load relative to the motion joint

3. A support system according to claim 1 or claim 2 wherein the elongate curved member (13) is provided with a mount (12) for securing a load to the curved member.

4. A support system according to any preceding claim, wherein:

   the elongate curved member (13) is defined by a portion of the circumference of a circle; and
   the motion joint (14) further includes a support arm-mount, such that a support arm (4) mounted thereon is slidable along and rotatable about the axis of the curved member.

5. A system according to claim 4 wherein the support arm (4) is pivotally connected to the motion joint (14).

6. A system according to claims 4 or 5 wherein the circle, the circumference of which the elongate curved member (13) is a portion has its centre at or near the centre of gravity of a display device mounted in use on the mounting system.

7. A system according to any preceding claim wherein the surface of the elongate curved member (13) matches a bearing surface of the motion joint (14).

8. A mounting head for a display monitor including the support system of claim 1, wherein the mounting head (5) comprises:

a movement joint hoop (11) with a fixing portion (12) for slideable engagement with a monitor supporting plate (6), an elongate curved member (13) of substantially circular cross-section, the motion joint (14) having an internal circular bearing surface (15) corresponding to the circumference of the curved member (13) and being positioned on the curved member (13) and moveable along, and rotatable about the curved member (13).

9. A support system according to claim 2 wherein the motion joint (104) is provided with means for securing the motion joint in a through opening formed in a wall or surface (106) so that the curved member extends through said wall or surface, in use.

10. A support system according to any preceding claim having stop means provided at at least one end of the curved member to prevent complete withdrawal of the curved member through the motion joint.

**Patentansprüche**

1. Trägersystem zum schwenkbaren Tragen einer Last wie ein Anzeigegerät, wobei das System ein längliches gekrümmtes Element (13) und ein Bewegungsgelenk (14, 104) umfasst, das entlang dem gekrümmten Element (13) verschiebbar und um dieses drehbar ist, **dadurch gekennzeichnet, dass** das gekrümmte Element einen im Wesentlichen kreisförmigen Querschnitt hat und das Bewegungsgelenk eine innere Lagerfläche hat, die dem Umfang des gekrümmten Elements entspricht.

2. Trägersystem nach Anspruch 1, wobei das längliche gekrümmte Element ein längliches gekrümmtes Element (13) ist, das mit wenigstens einer axial verlaufenden, wenigstens teilweise zylindrischen operativen Fläche zum Eingreifen in die interne Lagerfläche des Bewegungsgelenks versehen ist; wobei die intere Lagerfläche des Bewegungsgelenks (14, 104) wenigstens teilweise zylindrisch und zum reibungsmäßigen Eingreifen in die oder jede operative Fläche des gekrümmten Elements ausgelegt ist, um es zuzulassen, dass eine an dem gekrümmten Element befestigte Last in einer gewählten longitudinalen Position des gekrümmten Elements relativ zum Bewegungsgelenk getragen wird; wobei das gekrümmte Element um die Achse der operativen Fläche innerhalb der internen Lagerfläche drehbar ist, um die Position und/oder Orientierung der Last relativ zu dem Bewegungsgelenk weiter zu justieren.

3. Trägersystem nach Anspruch 1 oder Anspruch 2, wobei das längliche gekrümmte Element (13) mit einer Halterung (12) zum Befestigen einer Last an dem gekrümmten Element versehen ist.

4. Trägersystem nach einem vorherigen Anspruch, wobei:

das längliche gekrümmte Element (13) durch einen Abschnitt des Umfangs eines Kreises definiert wird; und das Bewegungsgelenk (14) ferner eine Tragarmhalterung aufweist, so dass ein daran montierter Tragarm (4) daran entlang verschiebbar und um die Achse des gekrümmten Elements drehbar ist.

5. System nach Anspruch 4, wobei der Tragarm (4) schwenkbar mit dem Bewegungsgelenk (14) verbunden ist.

6. System nach Anspruch 4 oder 5, wobei der Kreis, von dessen Umfang das längliche gekrümmte Element (13) ein Abschnitt ist, seinen Mittelpunkt an oder nahe dem Schwerpunkt eines beim Gebrauch an dem Montagesystem montierten Anzeigegeräts hat.

7. System nach einem vorherigen Anspruch, wobei die Oberfläche des länglichen gekrümmten Elements (13) mit einer Lagerfläche des Bewegungsgelenks (14) übereinstimmt.

8. Montagekopf für einen Anzeigemonitor mit dem Trägersystem nach Anspruch 1, wobei der Montagekopf (5) Folgendes umfasst:

einen Bewegungsgelenkreifen (11) mit einem Befestigungsabschnitt (12) zum verschiebbaren Eingreifen in eine Monitorträgerplatte (6), ein längliches gekrümmtes Element (13) mit einem im Wesentlichen kreisförmigen Querschnitt,

wobei das Bewegungsgelenk (14) eine interne kreisförmige Lagerfläche (15) entsprechend dem Umfang des gekrümmten Elements (13) hat und an dem gekrümmten Element (13) positioniert ist und entlang dem gekrümmten Element (13) beweglich und darum herum drehbar ist.

9. Trägersystem nach Anspruch 2, wobei das Bewegungsgelenk (104) mit Mitteln zum Befestigen des Bewegungselements durch eine in einer Wand oder Oberfläche (106) ausgebildete Öffnung versehen ist, so dass das gekrümmte Element beim Gebrauch durch die genannte Wand oder Oberfläche verläuft.

10. Trägersystem nach einem vorherigen Anspruch mit Anschlagmitteln, die an wenigstens einem Ende des gekrümmten Elements vorgesehen sind, um ein vollständiges Herausziehen des gekrümmten Elements durch das Bewegungselement zu verhindern.

**Revendications**

1. Système de support pour supporter de manière pivotante une charge telle qu'un dispositif d'affichage, le système comprenant un élément courbe allongé (13) et une articulation de mouvement (14,104) pouvant coulisser le long de l'élément courbe (13) et tourner autour de celui-ci, **caractérisé en ce que** l'élément courbe a une coupe transversale sensiblement circulaire et l'articulation de mouvement présente une surface porteuse interne correspondant à la circonférence de l'élément courbe.

2. Système de support selon la revendication 1 dans lequel l'élément courbe allongé est un élément courbe allongé (13) doté d'une surface opérationnelle au moins s'étendant axialement, au moins partiellement cylindrique destinée à se mettre en prise avec la surface porteuse interne de l'articulation de mouvement ; la surface porteuse interne de l'articulation de mouvement (14,104) étant au moins partiellement cylindrique et adaptée pour se mettre en prise par friction avec la ou chaque surface opérationnelle de l'élément courbe de manière à permettre à une charge fixée à l'élément courbe d'être supportée dans une position longitudinale sélectionnée de l'élément courbe par rapport à l'articulation de mouvement ; l'élément courbe pouvant tourner autour de l'axe de la surface opérationnelle dans la surface porteuse interne pour ajuster davantage la position et/ou l'orientation de la charge par rapport à l'articulation.

3. Système de support selon la revendication 1 ou la revendication 2 dans lequel l'élément courbe allongé (13) est doté d'une monture (12) pour fixer une charge à l'élément courbe.

4. Système de support selon l'une quelconque des revendications précédentes, dans lequel :

l'élément courbe allongé (13) est défini par une partie de la circonférence d'un cercle ; et
l'articulation de mouvement (14) comporte en outre un bras de support-une monture, de telle sorte qu'un bras de support (4) monté sur celle-ci puisse coulisser le long de l'axe de l'élément courbe et tourner autour de celui-ci.

5. Système selon la revendication 4 dans lequel le bras de support (4) est raccordé de manière pivotante à l'articulation de mouvement (14).

6. Système selon les revendications 4 ou 5 dans lequel le cercle, une partie de la circonférence duquel définit l'élément courbe allongé (13), a son centre situé au centre de gravité, ou près du centre de gravité, d'un dispositif d'affichage monté, en service, sur le système de montage.

7. Système selon l'une quelconque des revendications précédentes dans lequel la surface de l'élément courbe allongé (13) correspond à une surface porteuse de l'articulation de mouvement (14).

8. Tête de montage pour écran d'affichage comportant le système de support selon la revendication 1, la tête de montage (5) comprenant :

un frette d'articulation de mouvement (11) présentant une partie de fixation (12) destinée à se mettre en prise par coulissement avec une plaque de support d'écran (6),
un élément courbe allongé (13) ayant une coupe transversale sensiblement circulaire,
l'articulation de mouvement (14) présentant une surface porteuse circulaire interne (15) correspondant à la circonférence de l'élément courbe (13) et étant positionnée sur l'élément courbe (13) et pouvant se déplacer le long de l'élément courbe (13) et autour de celui-ci.

9. Système de support selon la revendication 2 dans lequel l'articulation de mouvement (104) est dotée d'un moyen pour fixer l'articulation de mouvement dans une ouverture débouchante formée dans un mur ou une surface (106) de telle sorte que, en service, l'élément courbe s'étende à travers ledit mur ou ladite surface.

10. Système de support selon l'une quelconque des revendications précédentes présentant un moyen de butée fourni au niveau d'au moins une extrémité de l'élément courbe pour empêcher le retrait complet de l'élément courbe à travers l'articulation de mouvement.

Figure 1

Figure 2

EP 2 580 515 B1

Figure 4

Figure 3

Figure 5

Figure 7

Figure 6

Figure 8

17

Figure 9

Figure 10a

Figure 10b

EP 2 580 515 B1

Figure 11c

Figure 11b

Figure 11a

EP 2 580 515 B1

Figure 12a

Figure 12b

Figure 12c

EP 2 580 515 B1

offset

47

**Figure 13a**

Setting 1,2,3,4

35

spring D

30

block

a

e

43

13

o

n

44

45

5

m

28

g

19

29

21

T

d

19

42

J

z

**Figure 13b**

**Figure 13c**

L

y

vertical axis

e

o

29

44

x

x

d*cos(x+z)

29

g

d

L

g*cos y

d*sin(x+z)

z

45

**Figure 13d**

Figure 13f

Figure 13e

Figure 14a

Figure 14b

Figure 14c

W - weight
P - pivot
L - arm length

Figure 13g

## Torque at P create by weight

Figure 15

Figure 16a

Figure 16b

Figure 16c

w  - weight
P  - pivot
L  - arm length
b  - sliding dist
d  - pivot dist.
G  - spring force
S  - force opposed by link
e  - dist. perpendicular to link (force)

## Torque at P generate by constant force G

65

66

Torque at P(Nmm)

12000
10000
8000
6000
4000
2000
0

-60    -40    -20    0    20    40    60

Arm angle(deg)

- - - weight
— constant force

Figure 17

## Torque at P generate by Spring force

67

66

Torque at P(Nmm)

15000
10000
5000
0

-60    -40    -20    0    20    40    60

Arm angle(deg)

- - - weight
— spring force

Figure 18

Figure 19a

Figure 19b

Figure 19c

Figure 20a

Figure 20b

w - weight
P - pivot
L - arm length
b - sliding dist
d - pivot dist.
G - spring force
S - force opposed by link
e - dist. perpendicular to link (force)

Figure 20c

## Torque at P generate by spring and tilt pivot

Figure 21

Figure 22

Figure 23

Figure 24

**EP 2 580 515 B1**

**Patent documents cited in the description**

- GB 2438581 A
- US 7438269 B
- US 7438260 B
- GB 2447623 A
- US 20040245419 A